# EUROPÄISCHE PATENTANMELDUNG

(11) **EP 1 304 262 A2**
(43) Veröffentlichungstag der Anmeldung: **23.04.2003**
(21) Anmeldenummer: 02021938.2
(22) Anmeldetag: 30.09.2002
(51) Int. Cl.: B60Q 3/02

(54) **Innenleuchte für Fahrzeuge, vorzugsweise für Kraftfahrzeuge**

(30) Priorität: 22.10.2001 DE 20117292 U
(71) Anmelder: Schefenacker Vision Systems Germany GmbH & Co. KG, 73730 Esslingen (DE)
(72) Erfinder: Diez, Werner, 72649 Wolfschlugen (DE); Ulloa, Stephan, 73235 Weilheim/Teck. (DE)
(74) Vertreter: Jackisch-Kohl, Anna-Katharina

(57) **Zusammenfassung**

Die vorzugsweise für Kraftfahrzeuge vorgesehene Innenleuchte hat ein Lichtfenster (2, 3), hinter dem ein Leuchtmittel sitzt. Um mit der Innenleuchte den Innenraum des Kraftfahrzeuges optimal beleuchten zu können, weist die Innenleuchte zusätzlich zum Leuchtmittel wenigstens eine Elektrolumineszenzfolie auf. Dadurch kann die Innenleuchte auch während der Fahrt mit dem Fahrzeug eingeschaltet bleiben, ohne daß der Fahrer durch die eingeschaltete Innenbeleuchtung gestört ist. Falls mehr Licht benötigt wird, kann das Leuchtmittel zusätzlich eingeschaltet werden.

## Beschreibung

Die Erfindung betrifft eine Innenleuchte für Fahrzeuge, vorzugsweise für Kraftfahrzeuge, nach dem Oberbegriff des Anspruches 1.

Es sind Innenleuchten für Kraftfahrzeuge bekannt, die beispielsweise als Leseleuchten im Bereich oberhalb der vorderen und/oder hinteren Sitze am Dachhimmel vorgesehen sind. Als Leuchtmittel wird eine Glühlampe verwendet, die durch das Lichtfenster Licht in einem solchen Maße abstrahlt, daß beispielsweise der Beifahrer eine Straßenkarte lesen kann. Aufgrund der intensiven Lichtabstrahlung kann die Innenleuchte nur zum Lesen eingeschaltet werden, da sie während der Fahrt den Fahrer des Kraftfahrzeuges stört.

Der Erfindung liegt die Aufgabe zugrunde, die gattungsgemäße Innenleuchte so auszubilden, daß der Innenraum des Kraftfahrzeuges optimal beleuchtet wird.

Diese Aufgabe wird bei der gattungsgemäßen Innenleuchte erfindungsgemäß mit den kennzeichnenden Merkmalen des Anspruches 1 gelöst.

Die erfindungsgemäße Innenleuchte weist zusätzlich zum Leuchtmittel die Elektrolumineszenzfolie auf. Die Innenleuchte kann darum auch während der Fahrt mit dem Fahrzeug eingeschaltet bleiben, ohne daß der Fahrer durch die eingeschaltete Innenbeleuchtung gestört ist. Sobald mehr Licht benötigt wird, um beispielsweise eine Straßenkarte zu lesen, kann das Leuchtmittel zusätzlich eingeschaltet werden. Es ist auch möglich, die Elektrolumineszenzfolie und das Leuchtmittel gleichzeitig ein- und auszuschalten. Die Elektrolumineszenzfolie erzeugt zusätzliches Licht, so daß das Leuchtmittel weniger lichtintensiv strahlen muß. Die Innenleuchte wird bevorzugt im Fahrzeuginnenraum eingesetzt, beispielsweise im Bereich oberhalb der Vorder- und/oder Rücksitze des Fahrzeuges. Es ist auch möglich, die Innenleuchte beispielsweise im Fußraum des Beifahrers unterzubringen, im Bereich oberhalb der Seitenfenster des Kraftfahrzeuges oder auch im Kofferraum oder in einem Laderaum des Fahrzeuges. Wird die Innenleuchte im Kofferraum oder Laderaum des Fahrzeuges vorgesehen, ist es zweckmäßig, daß die Innenleuchte beim Öffnen des Koffer- bzw. Laderaumes automatisch eingeschaltet wird.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in perspektivischer Darstellung eine erfindungsgemäße Innenleuchte für Kraftfahrzeuge,
- Fig. 2: in perspektivischer Darstellung die Rückseite der Innenleuchte gemäß Fig. 1,
- Fig. 3: eine Draufsicht auf die Rückseite der Innenleuchte,

- Fig. 4: einen Schnitt längs der Linie IV-IV in Fig. 3,
- Fig. 5: eine Draufsicht auf die Rückseite der Elektrolumineszenzfolie in der Innenleuchte,
- Fig. 6: in schematischer Darstellung einen Schnitt längs der Linie VI-VI in Fig. 3.

Die Innenleuchte ist im Ausführungsbeispiel eine Fondleuchte, die beispielsweise am Dachhimmel eines Kraftfahrzeuges befestigt wird. Die Innenleuchte hat einen Träger 1, der im Ausführungsbeispiel als Rahmen ausgebildet ist und etwa rechteckigen Umriß hat. Die Rahmenöffnung wird durch zwei Lichtfenster 2 und 3 geschlossen, die vorteilhaft aus Kunststoff bestehen. Das Lichtfenster 2 ist wesentlich größer als das Lichtfenster 3. Beide Lichtfenster 2, 3 haben rechtekkigen Umriß und sind so angeordnet, daß ihre Längsachsen senkrecht zueinander liegen. Die beiden Lichtfenster 2, 3 schließen aneinander an. Die Länge des kleineren Lichtfensters 3 entspricht der Breite des größeren Lichtfensters 2. Im Ausführungsbeispiel sind die beiden Lichtfenster 2, 3 durch eine optische Fuge 4 voneinander getrennt. Selbstverständlich ist es möglich, daß die beiden Lichtfenster 2, 3 auch unmittelbar aneinanderstoßen.

Abweichend vom dargestellten Ausführungsbeispiel kann der rahmenförmige Träger 1 jeden geeigneten Umriß haben. So kann die Innenleuchte beispielsweise runden oder elliptischen Umriß, quadratischen Umriß oder auch eine unregelmäßige Umrißform haben, je nach den gewünschten Anforderungen und/oder den Einbaumöglichkeiten im Kraftfahrzeug. Auch ist eine optische Unterteilung der Rahmenöffnung durch zwei Lichtfenster 2, 3 nicht notwendig. Die Rahmenöffnung kann durch ein einziges Lichtfenster ausgefüllt sein.

Der rahmenförmige Träger 1 weist im dargestellten Ausführungsbeispiel über seinen Umfang annähernd gleiche Rahmenbreite auf. Der Träger 1 kann auch flächig ausgebildet sein und beispielsweise ein oder mehrere, jeweils durch ein Lichtfenster verschlossene Öffnungen aufweisen, durch die Licht nach innen in den Kraftfahrzeuginnenraum fällt.

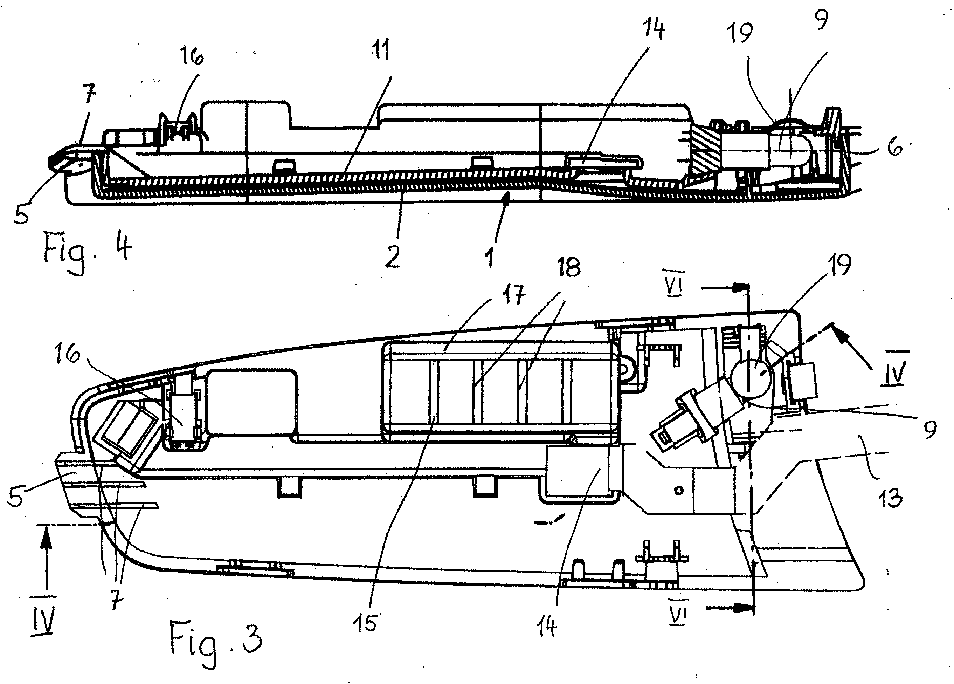

Die Innenleuchte läßt sich am Kraftfahrzeug in jeder geeigneten Art befestigen, beispielsweise durch eine Schnappverbindung, mittels Schrauben und dergleichen. Im Ausführungsbeispiel ist der Träger 1 mit einer vorstehenden Zunge 5 versehen, mit welcher die Innenleuchte den Rand einer Einbauöffnung im Kraftfahrzeug hintergreift. Wie insbesondere Fig. 4 zeigt, hat der rahmenförmige Träger 1 über seinen Umfang einen etwa rechtwinklig abgewinkelten Rand 6, so daß er etwa Wannenform hat. Die Zunge 5 ist am freien Ende dieses Randes 6 an einer Schmalseite des Trägers 1 vorgesehen, vorzugsweise einstückig mit dem Träger 1 ausgebildet. Auf der von den Lichtfenstern 2, 3 abgewandten Seite ist die Zunge 5 mit mehreren parallel zueinander liegenden Versteifungsrippen 7 versehen, die vorteilhaft einstückig mit der Zunge 5 ausgebildet sind.

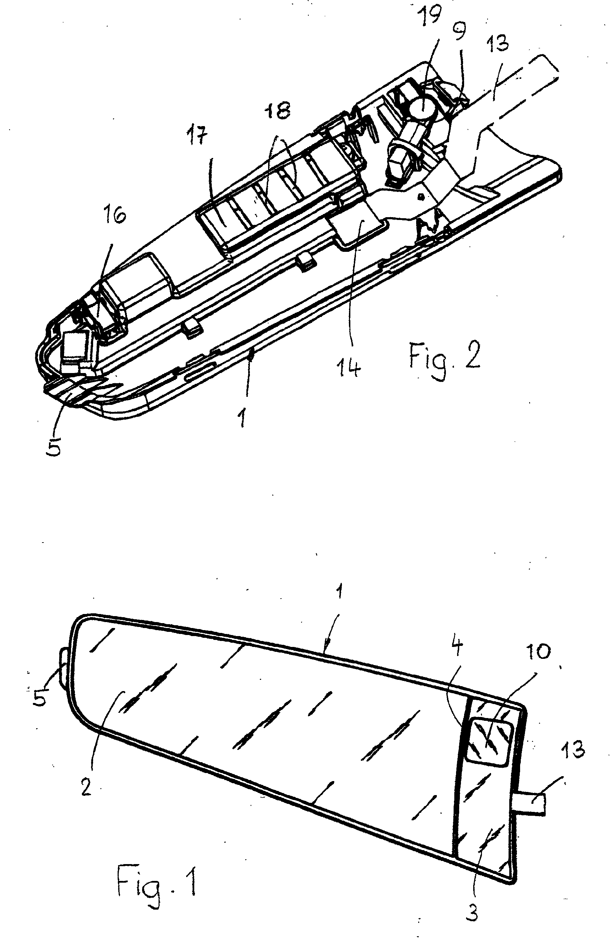

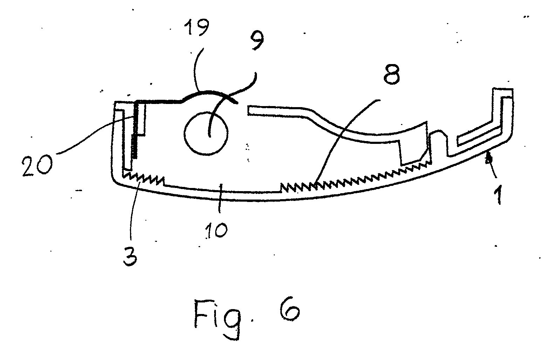

Der Träger 1 besteht vorteilhaft aus Kunststoff, kann aber auch aus Metall hergestellt sein. Das Lichtfenster 2 kann an seiner Rückseite eine Streifenoptik aufweisen. Wie Fig. 6 zeigt, ist das kleinere Lichtfenster 3 an der Rückseite ebenfalls mit einer Streifenoptik 8 versehen. In einem Bereich unmittelbar vor dem Leuchtmittel 9 hat das Lichtfenster 3 einen Bereich 10, in dem keine Streifenoptik vorgesehen ist. Der Lichtfensterbereich 10 kann, wie Fig. 1 zeigt, rechteckigen, insbesondere quadratischen Umriß haben. Selbstverständlich kann der Lichtfensterbereich 10 jeden anderen geeigneten und zweckmäßigen Umriß aufweisen. Je nach Lage des Leuchtmittels 9 ist der Lichtfensterbereich 10 innerhalb des Lichtfensters 3 vorgesehen. Im Ausführungsbeispiel liegt der Lichtfensterbereich 10 nahe der einen Längsseite der Innenleuchte.

Auf die Rückseite des Lichtfensters 2 und/oder des Lichtfensters 3 ist eine Elektrolumineszenzfolie 11, 12 aufgebracht. Sie deckt vorteilhaft das Lichtfenster 2, 3 vollständig ab. Diese Elektrolumineszensfolie 11, 12 kann in jeder geeigneten Weise an der Rückseite des Lichtfensters 2, 3 befestigt sein. Das von ihr ausgesandte Licht tritt durch die Lichtfenster 2, 3 nach außen. Im Lichtfensterbereich 10 ist die Elektrolumineszenzfolie 12, sofern sie in diesem Bereich vorgesehen ist, ausgespart, so daß das vom Leuchtmittel 9 ausgesandte Licht durch den Lichtfensterbereich 10 nach außen treten kann. Die Stromversorgung der Elektrolumineszenzfolie 11, 12 erfolgt über einen nach Art eines Flachbandes ausgebildeten Leiter 13, der an eine Elektronikeinheit 14 angeschlossen ist. Sie ist Teil eines Konverters 15, der ebenso wie die Elektronikeinheit 14 auf der Rückseite der Innenleuchte vorgesehen ist. Die Elektronikeinheit 14 ist über (nicht dargestellte) Leitungen mit einer Steckeraufnahme 16 verbunden, an die elektrische Leitungen der Elektrolumineszenzfolie 11 angeschlossen sind. Im Bereich der Elektronikeinheit 14 ist die Elektrolumineszenzfolie 11 vorteilhaft unterbrochen. Der Konverter 15 sitzt unter einer Abdeckung 17, die mit Lüftungsschlitzen 18 versehen ist.

Die Spannungsversorgung des Leuchtmittels 9 erfolgt ebenfalls über die Elektronikeinheit 14, die über (nicht dargestellte) Leitungen mit dem Leuchtmittel 9 verbunden ist. Das Leuchtmittel 9 ist eine Glühlampe, deren Licht durch das Lichtfenster 3 nach außen fällt. Die Glühlampe 9 liegt parallel zum Lichtfenster 3, so daß die Innenleuchte nur geringe Höhe hat. Anstelle der Glühlampe kann als Leuchtmittel 9 mindestens eine LED vorgesehen sein. Das Leuchtmittel 9 kann als Leseleuchte dienen, wenn die Innenleuchte im Kraftfahrzeug so angeordnet ist, daß das vom Leuchtmittel 9 ausgesandte Licht in entsprechender Richtung nach innen fällt. In diesem Falle ist es zweckmäßig, wenn das gesamte Lichtfenster 3 für den Lichtdurchtritt der Strahlen des Leuchtmittels 9 genutzt wird. Die Elektrolumineszenzfolie ist in einem solchen Fall nur im Bereich des Lichtfensters 2 vorgesehen. Da der Lichtfensterbereich 10 an der Rückseite des Lichtfensters 3 keine optischen Elemente, wie die Streifenoptik 8, aufweist, hat das durch den Lichtfensterbereich 10 hindurchgehende Licht eine hohe Intensität, so daß das Licht hervorragend zum Lesen im Kraftfahrzeug geeignet ist.

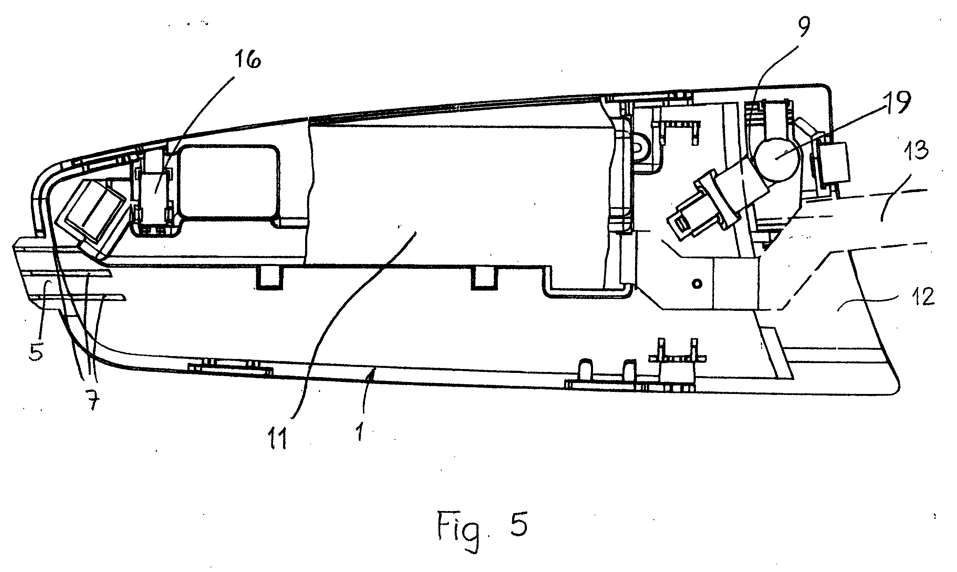

Damit die vom Leuchtmittel 9 ausgesandten Strahlen optimal nach außen gelangen können, befindet sich auf der vom Lichtfenster 3 abgewandten Seite des Leuchtmittels 9 ein Reflektor 19, mit dem die vom Leuchtmittel 9 nach hinten gerichteten Strahlen am Reflektor 19 nach vorn zum Lichtfenster 3 gelenkt werden. Der Reflektor 19 ist an einem L-förmigen Halter 20 vorgesehen, der an der Innenseite des abgewinkelten Randes des Trägers 1 befestigt ist (Fig. 6). Die für die Spannungsversorgung des Leuchtmittels 9 und der Elektrolumineszenzfolie 11, 12 notwendigen Bauteile 14 bis 16 sind auf der vom Lichtfenster 2, 3 abgewandten Seite der Elektrolumineszenzfolie 11, 12 vorgesehen. Wie die Fig. 2, 3 und 5 zeigen, liegen diese Bauteile im wesentlichen in Längsrichtung der Innenleuchte hintereinander, so daß sie nur geringe Breite hat.

Es ist vorteilhaft, das Leuchtmittel 9 und die Elektrolumineszenzfolie 11, 12 unabhängig voneinander ein- bzw. auszuschalten. Die Innenleuchte kann an jeder geeigneten Stelle im Kraftfahrzeuginnenraum vorgesehen sein. Es ist auch möglich, die Innenleuchte beispielsweise im Lade- oder im Kofferraum bzw. an der Heckklappe bzw. am Kofferraumdeckel zu befestigen.

## Patentansprüche

1. Innenleuchte für Fahrzeuge, vorzugsweise für Kraftfahrzeuge, mit wenigstens einem Lichtfenster, hinter dem wenigstens ein Leuchtmittel sitzt,
**dadurch gekennzeichnet, daß** die Innenleuchte zusätzlich zum Leuchtmittel (9) wenigstens eine Elektrolumineszenzfolie (11, 12) aufweist.

2. Innenleuchte nach Anspruch 1,
**dadurch gekennzeichnet, daß** die Elektrolumineszenzfolie (11, 12) an der Rückseite des Lichtfensters (2, 3) anliegt.

3. Innenleuchte nach Anspruch 1 oder 2,
**dadurch gekennzeichnet, daß** die Elektrolumineszenzfolie (11, 12) gleichen Umriß wie das Lichtfenster (2, 3) hat.

4. Innenleuchte nach einem der Ansprüche 1 bis 3,
**dadurch gekennzeichnet, daß** das Lichtfenster (2, 3) von einem Rahmen (1) umgeben ist.

5. Innenleuchte nach einem der Ansprüche 1 bis 4,
**dadurch gekennzeichnet, daß** für das Leuchtmittel (9) und die Elektrolumineszenzfolie (11, 12) jeweils wenigstens ein Lichtfenster (2, 3) vorgesehen sind.

6. Innenleuchte nach einem der Ansprüche 1 bis 5,
**dadurch gekennzeichnet, daß** das Leuchtmittel (9) eine Glühlampe ist.

7. Innenleuchte nach Anspruch 5 oder 6,
**dadurch gekennzeichnet, daß** das Lichtfenster (3) für das Leuchtmittel (9) kleiner ist als das Lichtfenster (2) für die Elektrolumineszenzfolie (11, 12).

8. Innenleuchte nach einem der Ansprüche 5 bis 7,
**dadurch gekennzeichnet, daß** das Lichtfenster (3) für das Leuchtmittel (9) an seiner Rückseite wenigstens teilweise mit einer Optik (8), vorzugsweise einer Streifenoptik, versehen ist.
